# EUROPÄISCHE PATENTSCHRIFT

(11) **EP 3 045 021 B1**
(45) Veröffentlichungstag und Bekanntmachung des Hinweises auf die Patenterteilung: **08.11.2017**
(21) Anmeldenummer: 13759797.7
(22) Anmeldetag: 12.09.2013
(51) Int. Cl.: H05G 2/00

(54) **STRAHLFÜHRUNGSEINRICHTUNG UND EUV-STRAHLUNGSERZEUGUNGSVORRICHTUNG MIT EINER ÜBERLAGERUNGSEINRICHTUNG**
BEAM GUIDING APPARATUS AND EUV BEAM GENERATING DEVICE COMPRISING A SUPERPOSITION APPARATUS
SYSTÈME DE GUIDAGE DE FAISCEAU ET DISPOSITIF GÉNÉRATEUR DE RAYONNEMENT EUV ÉQUIPÉ D'UN SYSTÈME DE SUPERPOSITION

(43) Veröffentlichungstag der Anmeldung: 20.07.2016
(73) Patentinhaber: TRUMPF Lasersystems for Semiconductor Manufacturing GmbH, 71254 Ditzingen (DE)
(72) Erfinder: LAMBERT, Martin, 71404 Korb (DE)
(74) Vertreter: Kohler Schmid Möbus Patentanwälte
(86) Internationale Anmeldenummer: PCT/EP2013/068952
(87) Internationale Veröffentlichungsnummer: WO 2015/036025

(56) Entgegenhaltungen:
- EP-A1- 2 182 412
- WO-A1-2012/073086
- US-A1- 2013 026 393

## Beschreibung

Die vorliegende Erfindung betrifft eine Strahlführungseinrichtung sowie eine EUV-Strahlungserzeugungsvorrichtung mit einer solchen Strahlführungseinrichtung.

Eine Strahlführungseinrichtung gemäß dem Oberbegriff von Anspruch 1 ist aus der WO 2012/073086 A1 bekannt geworden.

Eine Strahlführungseinrichtung für eine EUV-Strahlungserzeugungsvorrichtung ist beispielsweise auch aus der US 2011/0140008 A1 bekannt geworden. Die dort beschriebene Strahlführungseinrichtung dient zur Führung von Laserstrahlung, die in einer Strahlquelle, genauer gesagt in einem Treiberlasersystem, erzeugt und verstärkt wurde. Die Strahlführungseinrichtung führt den Laserstrahl von dem Treiberlasersystem zu einer Fokussiereinrichtung, um den Laserstrahl in einem Zielbereich zu fokussieren. In dem Zielbereich wird ein Target-Material bereitgestellt, welches bei der Bestrahlung mit dem Laserstrahl in einen Plasma-Zustand übergeht und hierbei EUV-Strahlung emittiert. Das Target-Material wird typischer Weise in einer Vakuum-Kammer bereitgestellt, in die der Laserstrahl über eine Öffnung eintritt.

Bei der Bestrahlung mit dem Laserstrahl wird in der Regel ein Teil des Target-Materials (z.B. Zinn) verdampft, der sich auf den optischen Oberflächen von optischen Elementen ablagert, die in der Nähe des Zielbereichs angeordnet sind. Um diesem Problem zu begegnen, wird als Laserquelle bzw. als Treiberlaser in der Regel ein CO₂-Laser verwendet: CO₂-Laserstrahlung wird aufgrund ihrer hohen Wellenlänge von ca. 10,6 µm auch von optischen Elementen reflektiert, die eine vergleichsweise raue optische Oberfläche aufweisen, wie sie durch Zinn-Ablagerungen hervorgerufen wird. Die Verwendung einer Laserquelle bzw. eines Treiberlasers in Form eines CO₂-Lasers ermöglicht zudem bei bestimmten TargetMaterialien, z.B. Zinn, eine hohe Konversionseffizienz zwischen der Eingangsleistung des Treiberlasers und der Ausgangsleistung der erzeugten EUV-Strahlung.

Aus der WO 2011/162903 ist eine Treiberlaseranordnung bekannt geworden, welche einen Seed-Laser zur Erzeugung eines Vor-Pulses und einen weiteren Seed-Laser zur Erzeugung eines Haupt-Pulses aufweist. Der Vor-Puls und der Haupt-Puls weisen unterschiedliche Wellenlängen auf und werden mittels eines Strahlkombinierers kombiniert, um entlang eines gemeinsamen Strahlwegs einen Verstärker sowie die auf die Treiberlaseranordnung folgende Strahlführungseinrichtung zu durchlaufen. Der Vor-Puls soll dazu dienen, das Target-Material zu beeinflussen, beispielsweise dieses aufzuheizen, zu expandieren, zu vaporisieren, zu ionisieren und/oder um ein schwaches oder ggf. ein starkes Plasma zu erzeugen. Der Haupt-Puls soll dazu dienen, den Hauptteil des von dem Vor-Puls beeinflussten Materials in den Plasmazustand überzuführen und hierbei EUV-Strahlung zu erzeugen.

Sowohl der Vor-Puls als auch der Haupt-Puls werden durch dieselbe Öffnung in die Vakuum-Kammer geführt. Da in der Vakuum-Kammer ein Druck herrscht, der typischer Weise geringer ist als der Druck in der Strahlführung außerhalb der Vakuum-Kammer, ist es in der Regel erforderlich, die Öffnung in der Vakuum-Kammer mittels eines transmissiven optischen Elements, welches beispielsweise ein Fenster, d.h. eine Planplatte, bilden kann, gasdicht gegen die Umgebung abzudichten. Das Material, aus dem das transmissive optische Element hergestellt ist, sollte einen möglichst verlustfreien bzw. aberrationsfreien Durchtritt für beide Laserstrahlen ermöglichen. Weicht die Wellenlänge des Laserstrahls, der zur Erzeugung des Vor-Pulses dient, deutlich von der Wellenlänge des Laserstrahls ab, der zur Erzeugung des Haupt-Pulses dient, lässt sich diese Bedingung jedoch nicht oder nur mit hohem Aufwand realisieren.

### Aufgabe der Erfindung

Der Erfindung liegt die Aufgabe zugrunde, eine Strahlführungseinrichtung sowie eine EUV-Strahlungserzeugungsvorrichtung mit einer solchen Strahlführungseinrichtung bereitzustellen, welche eine gemeinsame Fokussierung von Laserstrahlen mit unterschiedlichen Wellenlängen in einem Zielbereich ermöglichen.

### Gegenstand der Erfindung

Ein erster Aspekt der Erfindung betrifft eine Strahlführungseinrichtung, umfassend: eine Vakuum-Kammer, in der zur Erzeugung von EUV-Strahlung ein Target-Material in einem Zielbereich einbringbar ist, wobei die Vakuum-Kammer eine erste Öffnung zum Eintritt eines ersten Laserstrahls sowie eine zweite Öffnung zum Eintritt eines zweiten Laserstrahls aufweist, wobei der erste Laserstrahl und der zweite Laserstrahl unterschiedliche Wellenlängen aufweisen, sowie eine Überlagerungseinrichtung zur Überlagerung der beiden durch die erste und die zweite Öffnung in die Vakuum-Kammer eintretenden Laserstrahlen zur gemeinsamen Strahlführung in Richtung auf den Zielbereich, wobei die Überlagerungseinrichtung als ein in der Vakuum-Kammer angeordnetes reflektierendes optisches Element ausgebildet ist, welches einen ersten Flächenbereich zur Reflexion des ersten Laserstrahls und einen zweiten, den ersten ringförmig umgebenden Flächenbereich zur Reflexion des zweiten Laserstrahls aufweist, und wobei das reflektierende optische Element zur Aufweitung des ersten und des zweiten Laserstrahls ausgebildet ist.

Es wird vorgeschlagen, den ersten und den zweiten Laserstrahl nicht durch eine gemeinsame Öffnung bzw. durch ein gemeinsames Fenster in die Vakuum-Kammer eintreten zu lassen, sondern zu diesem Zweck zwei unterschiedliche Öffnungen zu verwenden, um ein für die jeweilige Wellenlänge optimiertes transmissives Material für das die jeweilige Öffnung verschließende transmissive optische Element verwenden zu können. Durch die beiden unterschiedlichen Öffnungen ergeben sich getrennte Strahlwege der beiden Laserstrahlen in der Vakuum-Kammer.

Es wird vorgeschlagen, zur Zusammenführung der beiden Strahlwege eine Überlagerungseinrichtung vorzusehen, welche die beiden durch die unterschiedlichen Öffnungen eintretenden Laserstrahlen zusammenführt und überlagert, so dass diese gemeinsam auf nach der Überlagerungseinrichtung angeordnete optische Elemente treffen. Unter einer Überlagerung wird im Sinne dieser Anmeldung verstanden, dass die Strahlachsen der beiden Laserstrahlen überlagert werden, d.h. dass die beiden Laserstrahlen nach der Überlagerung eine gemeinsame Strahlachse aufweisen. Die Laserstrahlen selbst propagieren entlang der gemeinsamen Strahlachse koaxial, d.h. die Strahlung des ersten Laserstrahls weist einen typischer Weise im Wesentlichen kreisförmigen Strahlquerschnitt auf, der von dem im Wesentlichen ringförmigen Strahlquerschnitt des zweiten Laserstrahls umgeben ist.

Eine getrennte Strahlführung der beiden Laserstrahlen hätte hingegen zur Folge, dass sich dynamische Anregungen durch Schwingungen, thermisch bedingte Verlagerungen eines jeweiligen optischen Elements, etc. auf die Laserstrahlen unterschiedlich auswirken, was unterschiedliche Strahlwege bzw. unterschiedliche Fluktuationen in der Länge der Strahlwege der beiden Laserstrahlen zur jeweiligen Fokusposition und somit eine Veränderung des relativen Abstandes zwischen den beiden Fokuspositionen der beiden Laserstrahlen in dem Zielbereich entlang einer Bewegungsrichtung bzw. eines Bewegungspfads des Target-Materials bzw. der Zinn-Tröpfchen zur Folge hätte. Der relative Abstand zwischen den beiden Fokuspositionen ist jedoch präzise einzuhalten, was durch die gemeinsame Strahlführung der beiden Laserstrahlen insbesondere bei deren Fokussierung bzw. beim Durchlaufen einer Fokussiereinrichtung sichergestellt werden kann, da sich Fehler bei der Strahlführung auf die gemeinsam geführten Laserstrahlen in gleicher Weise auswirken.

Die Überlagerungseinrichtung ist an einem in der Vakuum-Kammer angeordneten reflektierenden optischen Element, insbesondere einem Spiegel, gebildet, welches einen ersten Flächenbereich zur Reflexion des ersten Laserstrahls und einen zweiten, den ersten ringförmig umgebenden Flächenbereich zur Reflexion des zweiten Laserstrahls aufweist. Mit Hilfe der oben beschriebenen Überlagerungseinrichtung können zwei Laserstrahlen, die aus unterschiedlichen Richtungen bzw. unter unterschiedlichen Einfallswinkeln auf das reflektierende optische Element auftreffen, zusammengeführt werden, ohne dass zu diesem Zweck ein transmissives optisches Element verwendet werden muss, wie dies bei einer herkömmlichen Überlagerungseinrichtung der Fall ist, bei der ein teildurchlässiger Spiegel aus einem für mindestens einen Laserstrahl bzw. eine Wellenlänge transparentem Material sowie eine Beschichtung verwendet wird, die abhängig von der Wellenlänge aufwändig in der Herstellung sowie sehr empfindlich gegenüber Kontaminationen sein können.
Im einfachsten Fall handelt es sich bei dem reflektierenden optischen Element um einen Spiegel mit kreisrunder Geometrie, d.h. der innere Flächenbereich bildet eine konzentrisch zur geometrischen Mitte des Spiegels angeordnete Kreisfläche, während der äußere Flächenbereich eine äußere, konzentrische Ringfläche bildet. Der erste Laserstrahl wird über den inneren Flächenbereich umgelenkt, der zweite Laserstrahl über den äußeren Flächenbereich. Das reflektierende optische Element ist hierbei bezüglich der Strahlrichtungen der beiden einfallenden Laserstrahlen so ausgerichtet, dass diese nach der Reflexion bzw. Umlenkung entlang einer gemeinsamen Strahlrichtung propagieren. Im einfachsten Fall, nicht gemäß der Erfindung wie in den Ansprüchen definiert, können der erste Flächenbereich und der zweite Flächenbereich als plane Flächen ausgebildet sein, die gegeneinander verkippt sind. Der erste und der zweite Flächenbereich können jeweils mit einer für die Wellenlänge des zu reflektierenden Laserstrahls reflektierenden Beschichtung versehen sein, d.h. mit einer Beschichtung, welche die Reflektivität des Flächenbereichs für die jeweilige Wellenlänge erhöht. Die Flächenbereiche selbst sind typischer Weise an der Oberfläche eines metallischen Materials gebildet, das in der Regel einer Oberflächenbehandlung unterzogen wurde. Erfindungsgemäß ist das reflektierende optische Element zur Aufweitung des ersten und des zweiten Laserstrahls ausgebildet. Das reflektierende optische Element dient zusätzlich zur Überlagerung der beiden Laserstrahlen auch zur Strahlaufweitung, d.h. zur Erzeugung von divergenten Laserstrahlen und/oder zur Erhöhung der Divergenz der Laserstrahlen. Die beiden Flächenbereiche weisen zu diesem Zweck typischer Weise eine konvexe Krümmung auf. Die Strahlaufweitung der Laserstrahlen ist insbesondere in Kombination mit einem nachfolgenden optischen Element günstig, welches die divergenten Laserstrahlen in dem Zielbereich fokussiert.

In einer Weiterbildung bildet der erste Flächenbereich eine konvex gekrümmte Paraboloid-Oberfläche. Bei der Paraboloid-Oberfläche handelt es sich typischer Weise um eine reflektierende Oberfläche, die ein Off-Axis Segment eines Paraboloids bildet. Der Begriff "Off-Axis" bedeutet, dass der erste Flächenbereich nicht die Rotationsachse bzw. die Hauptachse des Paraboloids (und damit auch nicht den Scheitelpunkt des Paraboloids) enthält. Typischer Weise verläuft die Strahlrichtung des auf den ersten Flächenbereich auftreffenden Laserstrahls parallel zur Hauptachse des Paraboloids. Handelt es sich bei dem ersten Laserstrahl um einen kollimierten Laserstrahl bzw. um einen Parallelstrahl, kann auf diese Weise eine aberrationsfreie Abbildung realisiert werden.

Auch der zweite Flächenbereich des reflektierenden optischen Elements kann als konvex gekrümmte Paraboloid-Oberfläche ausgebildet sein. In diesem Fall bildet der zweite Flächenbereich typischer Weise ebenfalls ein Off-Axis Segment eines Paraboloids, d.h. die Hauptachse des Paraboloids verläuft parallel zum einfallenden zweiten Laserstrahl, aber nicht durch den zweiten Flächenbereich. Handelt es sich bei dem einfallenden zweiten Laserstrahl um einen Parallelstrahl, kann auf diese Weise eine aberrationsfreie Abbildung des zweiten Laserstrahls realisiert werden.

In einer weiteren Ausführungsform bildet der zweite Flächenbereich eine konvex gekrümmte Hyperboloid-Oberfläche. Mit Hilfe einer gekrümmten Hyperboloid-Oberfläche kann eine aberrationsfreie Abbildung eines divergent auf den zweiten Flächenbereich auftreffenden Laserstrahls realisiert werden. Typischer Weise handelt es sich bei der Hyperboloid-Oberfläche ebenfalls um ein Off-Axis Segment eines Rotationshyperboloids, d.h. der zweite Flächenbereich enthält nicht die Rotationsachse bzw. die Hauptachse des Hyperboloids, verläuft aber parallel zur Hauptachse.

Die Verwendung eines zweiten Laserstrahls, der divergent auf den zweiten Flächenbereich auftrifft, hat sich als günstig erwiesen, wenn der erste, innere Flächenbereich bereits eine vergleichsweise große numerische Apertur aufweist, da in diesem Fall der konzentrisch angeordnete ringförmige zweite Flächenbereich noch größer ist, so dass bei der Verwendung eines kollimierten zweiten Laserstrahls die im Strahlengang vor der Überlagerungseinrichtung angeordneten optischen Elemente entsprechend groß dimensioniert werden müssten, insbesondere das optische Element, durch welches der zweite Laserstrahl in die Vakuum-Kammer eintritt, sowie eine Strahlformungseinrichtung zur Bildung eines zweiten Laserstrahls mit ringförmigem Strahlquerschnitt. Alternativ könnte zur Erzeugung eines ringförmigen Strahlquerschnitts eine Parallel-Aufweitung auch innerhalb der Vakuum-Kammer selbst erfolgen, wozu aber ebenfalls die Verwendung von vergleichsweise großen optischen Elementen erforderlich wäre.

Handelt es sich bei dem zweiten Laserstrahl um einen konvergenten Laserstrahl, kann der zweite Flächenbereich zur Realisierung einer aberrationsfreien Abbildung als konvex gekrümmte Ellipsoid-Oberfläche ausgebildet werden. Auch in diesem Fall bildet der zweite Flächenbereich typischer Weise ein Off-Axis Segment des Ellipsoids, d.h. sowohl die große als auch die kleine Halbachse des Ellipsoids verläuft nicht durch den zweiten Flächenbereich. Abhängig davon, ob der erste Laserstrahl konvergent, divergent oder kollimiert auf den ersten Flächenbereich auftrifft, kann dieser ebenfalls als konvexe Ellipsoid-Oberfläche, als Hyperboloid-Oberfläche oder wie oben beschrieben als Paraboloid-Oberfläche ausgebildet werden.

In einer weiteren Ausführungsform ist zur Fokussierung des ersten und zweiten Laserstrahls innerhalb des Zielbereichs im Strahlengang nach dem die Überlagerungseinrichtung bildenden reflektierenden optischen Element ein, insbesondere reflektierendes, fokussierendes optisches Element angeordnet. Das fokussierende optische Element (typischer Weise ein fokussierender Spiegel) wird von den beiden Laserstrahlen gemeinsam durchlaufen, so das sich temperaturbedingte Fluktuationen oder thermisch bedingte Verlagerungen des fokussierenden optischen Elements auf beide Laserstrahlen gleichermaßen auswirken und daher bei solchen Fluktuationen der relative Abstand zwischen den beiden Fokuspositionen nicht beeinflusst wird.

In einer weiteren Ausführungsform weist das fokussierende optische Element mindestens eine konkav gekrümmte, reflektierende Ellipsoid-Oberfläche auf. Insbesondere kann es sich bei dem fokussierenden optischen Element um einen Ellipsoidspiegel mit einem einzigen, ein Off-Axis-Segment eines Ellipsoids bildenden reflektierenden Oberfläche handeln. In diesem Fall kann die reflektierende Ellipsoid-Oberfläche in den beiden Teilbereichen, in denen der erste bzw. der zweite Laserstrahl auftrifft, mit jeweils unterschiedlichen, für die Reflexion der jeweiligen Wellenlänge optimierten Beschichtungen versehen sein. Der Ellipsoidspiegel dient zur Fokussierung der beiden Laserstrahlen an einer jeweiligen Fokusposition innerhalb des Zielbereichs, die im Wesentlichen mit einem austrittseitigen Brennpunkt des Ellipsoidspiegels übereinstimmt.

In einer Weiterbildung weist das fokussierende optische Element einen ersten Flächenbereich zur Reflexion des ersten Laserstrahls und einen zweiten, den ersten ringförmig umgebenden Flächenbereich zur Reflexion des zweiten Laserstrahls auf. Bei dem ersten Flächenbereich kann es sich insbesondere um eine konkav gekrümmte Ellipsoid-Oberfläche handeln. Auch der zweite, konkav gekrümmte Flächenbereich kann als reflektierende Ellipsoid-Oberfläche ausgebildet sein.

Bei einer Weiterbildung bildet der erste Flächenbereich eine erste konkav gekrümmte Ellipsoid-Oberfläche mit einer ersten eingangsseitigen Brennweite und der zweite Flächenbereich bildet eine zweite konkav gekrümmte Ellipsoid-Oberfläche mit einer zweiten, von der ersten Ellipsoid-Oberfläche verschiedenen eingangsseitigen Brennweite. Die beiden Ellipsoid-Oberflächen weisen somit unterschiedliche eingangsseitige Brennweiten, d.h. unterschiedliche eingangsseitige Fokuspositionen auf. Dies ist günstig, um eine Beleuchtung bzw. Abbildung der Übergangszone, die zwischen dem ersten und dem zweiten Flächenbereich des die Überlagerungseinrichtung bildenden optischen Elements besteht, zu vermeiden und damit Beugungseffekte zu verhindern. Die Hauptachsen der beiden Ellipsoid-Oberflächen und damit die eintrittsseitigen Fokuspunkte liegen auf einer gemeinsamen Linie. Es hat sich als günstig erwiesen, wenn die eingangsseitige Brennweite der zweiten, äußeren Ellipsoid-Oberfläche größer ist als die eingangsseitige Brennweite der ersten, inneren Ellipsoid-Oberfläche.

In einer Weiterbildung weisen die erste und die zweite konkav gekrümmte Ellipsoid-Oberfläche gleich große ausgangsseitige Brennweiten auf, d.h. die beiden an dem ersten bzw. dem zweiten Flächenbereich umgelenkten Laserstrahlen werden im gleichen Abstand zum Ellipsoidspiegel fokussiert.

Bei einer weiteren Ausführungsform sind eine eingangsseitige Brennweite der ersten konkav gekrümmten Ellipsoid-Oberfläche und eine ausgangsseitige Brennweite der ersten konkav gekrümmten Ellipsoid-Oberfläche gleich groß. Da die konkav gekrümmte Ellipsoid-Oberfläche bei der vorliegenden Anwendung verhältnismäßig groß ist, sollten die eingangsseitige und die ausgangsseitige Brennweite der inneren Ellipsoid-Oberfläche gleich groß sein, da ansonsten eine Unwucht bei der Herstellung des Spiegels die erreichbare Genauigkeit erheblich einschränken könnte. Auch für den Fall, dass der fokussierende Spiegel nur eine einzige Ellipsoid-Oberfläche aufweist, sollten daher die eingangsseitige und die ausgangsseitige Brennweite übereinstimmen.

In einer weiteren Ausführungsform ist im Strahlengang nach dem fokussierenden optischen Element ein Umlenkspiegel zur Umlenkung des ersten und zweiten Laserstrahls in Richtung auf den Zielbereich angeordnet. Der Umlenkspiegel weist typischer Weise eine plane Spiegelfläche auf und dient als Faltungsspiegel, um den benötigten Bauraum innerhalb der Vakuum-Kammer zu verringern. Um den relativen Abstand zwischen den Fokuspositionen der beiden Laserstrahlen innerhalb des Zielbereichs genau einhalten zu können, ist es typischer Weise erforderlich, dass beide Laserstrahlen parallel, genauer gesagt entlang einer gemeinsamen Strahlrichtung ausgerichtet auf den Umlenkspiegel auftreffen, was durch die weiter oben beschriebene Überlagerung ermöglicht wird.

In einer Weiterbildung ist der Umlenkspiegel zur gemeinsamen Veränderung der Fokuspositionen des ersten und zweiten Laserstrahls verkippbar ausgebildet, d.h. der Umlenkspiegel kann mittels eines motorischen Antriebes verkippt werden. Durch die Verkippung des Umlenkspiegels kann die Fokusposition des Haupt-Pulses in einer Richtung senkrecht zur Bewegungsrichtung des Target-Materials (beispielsweise der Schwerkraftrichtung oder einer anderen, z.B. im Wesentlichen horizontalen Richtung, die ausgehend vom Austritt des Target-Materials aus einer Bereitstellungseinrichtung einer Wurfparabel entspricht) verschoben bzw. nachgeführt werden, um bei der Bestrahlung des Target-Materials eine optimale Plasmaausbeute zu erzielen.

Ohne die Verwendung der Überlagerungseinrichtung würden der erste und der zweite Laserstrahl innerhalb der Vakuum-Kammer entlang von getrennten Strahlwegen geführt, so dass zur Einhaltung eines konstanten relativen Abstandes zwischen den beiden Fokuspositionen bei einer solchen Nachführung ein weiterer motorisch angetriebener Spiegel erforderlich wäre, um die Fokusposition des zweiten Laserstrahls entsprechend der Fokusposition des ersten Laserstrahls nachzuführen, oder umgekehrt. Bei der Verwendung der hier beschriebenen Überlagerungseinrichtung kann ein Einfall der beiden Laserstrahlen mit identischer Strahlrichtung auf den Umlenkspiegel realisiert werden und daher mittels eines einzigen motorisch angetriebenen Umlenkspiegels die Fokuspositionen des ersten und zweiten Laserstrahls in gleicher Weise verändert werden, so dass auf einen weiteren motorisch angetriebenen Umlenkspiegel verzichtet werden kann.

Bei einer weiteren Ausführungsform umfasst die Strahlführungseinrichtung zusätzlich eine im Strahlengang des zweiten Laserstrahls vor der Überlagerungseinrichtung angeordnete Strahlformungseinrichtung zur Bildung eines zweiten Laserstrahls mit ringförmigem Strahlprofil. Eine solche Strahlformungseinrichtung ist günstig, um das Strahlprofil des zweiten Laserstrahls an die ringförmige Geometrie der zweiten Flächenbereichs anzupassen und somit den zweiten Laserstrahl an dem ringförmigen äußeren Flächenbereich mit mit möglichst geringem Verlust an Strahlungsleistung reflektieren zu können.

Die Strahlformungseinrichtung kann mindestens eine konische Fläche aufweisen, d.h. die Strahlformungseinrichtung ist in der Art eines Axicons ausgebilet. Die konische Fläche des Axicons kann als reflektierende Oberfläche ausgebildet sein, es ist aber auch möglich, ein transmissives optisches Element mit einer konischen Oberfläche als Axicon für die Strahlaufweitung zu verwenden.

Die Strahlformungseinrichtung kann zur Strahlaufweitung des zweiten Laserstrahls, d.h. zur Formung eines divergenten zweiten Laserstrahls ausgebildet sein. Die Formung eines divergenten zweiten Laserstrahls ist insbesondere günstig, wenn der als Überlagerungseinrichtung dienende Spiegel bereits eine große eingangsseitige numerische Apertur aufweist, da in diesem Fall bei der Verwendung eines ringförmigen kollimierten zweiten Laserstrahls die Strahlformungseinrichtung und das Fenster in der Vakuum-Kammer zum Eintritt des zweiten Laserstrahls entsprechend groß dimensioniert werden müssten oder ggf. zur Bildung eines ringförmigen Strahlprofils eine Parallel-Aufweitung innerhalb der Vakuum-Kammer mit vergleichsweise großen optischen Elementen vor dem aufweitenden Spiegel erfolgen müsste. Bei der Realisierung eines genügend großen Abstandes zwischen der Strahlformungseinrichtung und dem als Überlagerungseinrichtung dienenden Spiegel können bei der Verwendung des divergenten zweiten Laserstrahls die vorgelagerten Elemente, d.h. die Strahlformungseinrichtung und das Fenster, erheblich kleiner dimensioniert werden.

Bei einer Weiterbildung weist die Strahlformungseinrichtung eine ringförmig umlaufende Spiegelfläche auf, um den von der konischen Fläche in radialer Richtung aufgeweiteten Laserstrahl umzulenken, so dass der austretende Laserstrahl mit einem ringförmigen Strahlquerschnitt im Wesentlichen koaxial bzw. parallel zur Strahlrichtung des in die Strahlformungseinrichtung eintretenden Laserstrahls (mit kreisrundem Strahlquerschnitt) verläuft. Bei der ringförmig umlaufenden Spiegelfläche kann es sich beispielsweise um eine plane Fläche handeln, die in Abhängigkeit von ihrer Ausrichtung bezüglich der konischen Fläche einen konvergenten, divergenten oder kollimierten austretenden ringförmigen Laserstrahl erzeugt. Die Spiegelfläche kann an einem Umlenkspiegel ausgebildet sein, der nicht für den zweiten Laserstrahl transparent ist, es kann sich aber auch um eine verspiegelte Fläche handeln, die an einem Grundkörper aus einem für den zweiten Laserstrahl transmissiven Material angebracht ist.

Bei einer Weiterbildung bildet die ringförmig umlaufende Spiegelfläche eine konvex gekrümmte Paraboloid-Oberfläche. Mit Hilfe einer konvex gekrümmten umlaufenden Spiegelfläche kann ein austretender Laserstrahl mit einem divergenten ringförmigen Strahlprofil erzeugt werden, bei dem die radial innen und außen liegenden Randstrahlen des divergenten Strahlprofils nicht parallel zueinander verlaufen, sondern einen Winkel miteinander einschließen, d.h. divergieren.

Die Stahlführungseinrichtung kann ein die erste Öffnung der Vakuum-Kammer gasdicht abschließendes, den ersten Laserstrahl transmittierendes optisches Element, insbesondere ein erstes Fenster, sowie ein die zweite Öffnung der Vakuum-Kammer gasdicht abschließendes, den zweiten Laserstrahl transmittierendes optisches Element, insbesondere ein zweites Fenster, aufweisen. Die optischen Elemente an der ersten bzw. zweiten Öffnung können grundsätzlich neben ihrer transmittierenden Funktion auch noch andere optische Funktionen, wie zum Beispiel eine kollimierende oder fokussierende Funktion, für die durch diese hindurch tretenden Laserstrahlen erfüllen. Ein als Fenster, d.h. als planparallele Platte, ausgebildetes transmittierendes optisches Element hat hingegen keine strahlformende Funktion.

An einer der Vakuum-Kammer abgewandten Oberfläche und/oder an einer in der Vakuum-Kammer angeordneten Oberfläche des jeweiligen optischen Elements kann eine Anti-Reflexbeschichtung für den transmittierten ersten oder zweiten Laserstrahl angebracht sein. Auf diese Weise treten an den Oberflächen des transmittierenden optischen Elements keine oder kaum Reflexe auf, sodass die Laserstrahlen vollständig oder nahezu vollständig transmittiert werden. Verluste bzw. Streuungen werden somit in vorteilhafter Weise reduziert oder idealer Weise vollständig vermieden.

Die Strahlführungseinrichtung kann zusätzlich eine Kontrolleinrichtung bzw. eine Steuer- und Regeleinrichtung zum Regeln mindestens einer der Fokuspositionen der beiden Laserstrahlen an eine Soll-Fokusposition umfassen. Zur gegebenenfalls erforderlichen Anpassung des Abstandes zwischen den beiden Fokuspositionen kann mittels der Steuer- und Regeleinrichtung mindestens eine Fokusposition eines der beiden Laserstrahlen auf eine Soll-Fokusposition geregelt werden. Für die Regelung können die Strahlengänge der Laserstrahlen mittels geeigneter Messeinrichtungen vermessen werden. Die Regeleinrichtung kann zur Beeinflussung der Fokuspositionen signaltechnisch beispielsweise mit einer Fokuseinstelleinrichtung, insbesondere mit Aktoren einer Fokuseinstelleinrichtung, verbunden werden, mit der bzw. mit denen die Strahlrichtungen der Laserstrahlen beeinflussbar sind, sowie mit Aktoren einer Fokussiereinrichtung für die einzelnen Laserstrahlen, beispielsweise zur Verschiebung von in dieser vorgesehenen fokussierenden Elementen, insbesondere von dort vorgesehenen Linsen. Die Steuer- und/oder Regeleinrichtung dient auch der Synchronisierung der die Laserstrahlen erzeugenden Strahlquellen mit der Bereitstellungseinrichtung für das Target-Material.

Der erste Laserstrahl kann eine Wellenlänge von mehr als 10 µm aufweisen. Zur Erzeugung der Wellenlänge von mehr als 10 µm wird als Laserquelle bzw. als Treiberlaser in der Regel ein CO₂-Laser verwendet: CO₂-Laserstrahlung wird aufgrund ihrer hohen Wellenlänge von ca. 10,6 µm auch von optischen Elementen reflektiert, die eine vergleichsweise raue optische Oberfläche aufweisen, wie sie durch Zinn-Ablagerungen hervorgerufen werden kann, die bei der Verwendung von Zinn als Target-Material auftreten können. Die Verwendung einer Laserquelle bzw. eines Treiberlasers in Form eines CO₂-Lasers ermöglicht zudem bei Zinn als Target-Material eine hohe Konversionseffizienz zwischen der Eingangsleistung des Treiberlasers und der Ausgangsleistung der erzeugten EUV-Strahlung, sofern der CO₂-Laser zur Erzeugung des Haupt-Pulses verwendet wird.

Der zweite Laserstrahl kann eine Wellenlänge von weniger als 3 µm aufweisen. Zur Erzeugung der Wellenlänge von weniger als 3 µm wird als Laserquelle in der Regel ein Festkörperlaser verwendet, beispielsweise ein Nd:YAG Laser mit einer Wellenlänge von 1,06 µm, der typischer Weise als Kurzpulslaser, d.h. mit Pulslängen im Nanosekunden-Bereich oder im Pikosekunden-Bereich betrieben wird. Es versteht sich, dass auch Festkörperlaser oder andere Laser, die Wellenlängen von weniger als 3 µm erzeugen, als Strahlquelle genutzt werden können, um den Vor-Puls zu erzeugen. Die Verwendung von Laserstrahlung mit vergleichsweise geringer Wellenlänge hat sich für die Erzeugung des Vor-Pulses als günstig erwiesen, da sich hierdurch sehr kurze Pulsdauern sowie eine scharfe Fokussierung des Vor-Pulses in dem Zielbereich realisieren lassen.

Die Aufgabe wird ferner gelöst durch eine EUV-Strahlungserzeugungsvorrichtung, umfassend: eine erste und zweite Strahlquelle zur Erzeugung des ersten und zweiten Laserstrahls, sowie eine Strahlführungseinrichtung wie oben beschrieben. Die EUV-Strahlungserzeugungsvorrichtung macht im Wesentlichen von denselben Vorteilen Gebrauch wie die oben beschriebene Strahlführungseinrichtung.

Bei der zweiten Strahlquelle kann es sich insbesondere um einen Festkörperlaser (ggf. mit geeigneten Verstärkerstufen) handeln, die zur Erzeugung des Vor-Pulses dient, bei der ersten Strahlquelle kann es sich um eine CO₂-Laserquelle (ggf. mit geeigneten Verstärkerstufen) zur Erzeugung des Haupt-Pulses handeln. Mittels der oben beschriebenen Steuer- bzw. Regeleinrichtung kann eine gewünschte Soll-Fokusposition eines jeweiligen Laserstrahls innerhalb des Zielbereichs geregelt bzw. eingestellt werden. Eine solche Regelung ist vorteilhaft, wenn strahlungsquellenseitig oder an anderen optischen Komponenten, beispielsweise an den Fenstern, Störungen auftreten, die dazu führen, dass sich die Fokusposition verändert. Beispielsweise können durch die Regeleinrichtung Störungen in Form von Schwankungen in der Richtung oder Divergenz des Laserstrahls (beispielsweise Drift) "herausgeregelt" bzw. unterdrückt werden, sodass die beiden Laserstrahlen bzw. deren Fokuspositionen durch die Nachregelung an ihrer jeweiligen Soll-Fokusposition verbleiben.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein Ausführungsbeispiel einer EUV-Strahlungserzeugungsvorrichtung mit einer Überlagerungseinrichtung in Form eines aufweitenden Spiegels, auf den ein erster, kollimierter Laserstrahl und ein zweiter, divergenter Laserstrahl auftreffen,
- Fig. 2: eine Draufsicht auf den Spiegel von Fig. 1 mit einem ersten, inneren Flächenbereich zur Reflexion des ersten Laserstrahls und einem zweiten, den ersten ringförmig umgebenden Flächenbereich zur Reflexion des zweiten Laserstrahls,
- Fig. 3: eine Darstellung des Strahlengangs in der Vakuum-Kammer von Fig. 1 mit einem im Strahlengang auf den aufweitenden Spiegel folgenden Ellipsoidspiegel mit zwei unterschiedlichen eingangsseitigen Brennweiten,
- Fig. 4: eine Darstellung analog Fig. 3, bei welcher der zweite Laserstrahl kollimiert auf den aufweitenden Spiegel auftrifft und mit einem im Strahlengang nachfolgenden Ellipsoidspiegel mit einer einzigen eingangsseitigen Brennweite,
- Fig. 5: eine Darstellung analog Fig. 4, bei welcher der Ellipsoidspiegel zwei unterschiedliche eingangsseitige Brennweiten aufweist, und
- Fig. 6: eine Darstellung einer Strahlformungseinrichtung zur Bildung eines zweiten Laserstrahls mit ringförmigem Strahlprofil.

In der folgenden Beschreibung der Zeichnungen werden für gleiche bzw. funktionsgleiche Bauteile identische Bezugszeichen verwendet.

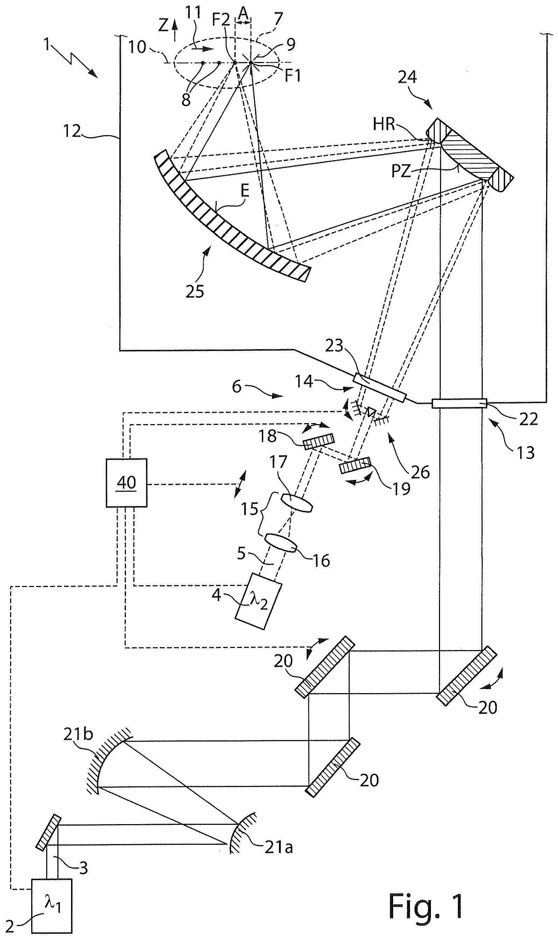

**Fig. 1** zeigt eine EUV-Strahlungserzeugungsvorrichtung 1 mit einer ersten Strahlquelle 2 in Form eines als CO₂-Laser ausgebildeten Treiberlasers, der einen ersten, gepulsten Laserstrahl 3 mit hoher Strahlungsleistung (>> 1 kW) erzeugt und mit einer zweiten Strahlquelle 4 in Form eines Festkörperlasers, der einen zweiten, ebenfalls gepulsten Laserstrahl 5 erzeugt. Zur Erzeugung des ersten Laserstrahls 3 mit hoher Strahlleistung kann die erste Strahlquelle 2 mehrere Verstärker umfassen. Der erste Laserstrahl 3 und der zweite Laserstrahl 5 weisen im gezeigten Beispiel deutlich unterschiedliche Wellenlängen λ₁, λ₂ auf, d.h. Wellenlängen, die sich ungefähr um eine Größenordnung unterscheiden. Es versteht sich, dass die Differenz zwischen den beiden Wellenlängen λ₁, λ₂ auch geringer oder ggf. größer sein kann.

Im gezeigten Beispiel weist der von dem Festkörperlaser 2 in Form eines Nd:YAG Lasers, beispielsweise eines Scheibenlasers, im Ultrakurzpulsbetrieb, d.h. mit Pulsraten im Nanosekunden-Bereich oder im Pikosekunden-Bereich, erzeugte zweite Laserstrahl 5 eine Wellenlänge λ₂ von ca. 1,06 µm auf. Der von dem CO₂-Laser erzeugte erste Laserstrahl 3 weist eine Wellenlänge λ₁ von ca. 10,6 µm auf. Die EUV-Strahlungserzeugungsvorrichtung 1 umfasst ferner eine Strahlführungseinrichtung 6 mittels derer die beiden Laserstrahlen 3, 5 in Richtung auf einen Zielbereich 7 geführt werden, an dem ein Target-Material 8 in Form von Zinn-Tröpfchen eingebracht ist, um EUV-Strahlung 9 zu erzeugen. Auf die Darstellung von Messeinrichtungen zur Überwachung des Strahlengangs der Laserstrahlen 3, 5 wurde aus Gründen der Übersichtlichkeit verzichtet. Das Target-Material 8, d.h. die Zinn-Tröpfchen, werden mittels einer (nicht gezeigten) Bereitstellungseinrichtung erzeugt und dieses bewegt sich entlang einer vorgegebenen Bewegungsbahn 10 bzw. eines vorgegebenen Pfades, welche einer im Wesentlichen horizontalen, geradlinigen Bewegungsbahn in der Art einer Wurfparabel entspricht, entlang einer horizontalen Bewegungsrichtung 11. Es versteht sich, dass die Bewegungsrichtung 11 auch einer anderen Richtung, z.B. der Schwerkraftrichtung, entsprechen kann.

Für die Erzeugung der EUV-Strahlung 9 wird das Target-Material 8 zunächst durch den zweiten Laserstrahl 5, welcher einen Vor-Puls bildet, beeinflusst, d.h. aufgeheizt, expandiert, vaporisiert, ionisiert und/oder in den Zustand eines schwachen oder ggf. eines starken Plasmas gebracht. Durch den ersten Laserstrahl 3, welcher einen Haupt-Puls mit höherer Leistung bildet, wird der Hauptteil des von dem zweiten Laserstrahl 5 beeinflussten Target-Materials 8 in den Plasmazustand überführt und hierbei die EUV-Strahlung 9 erzeugt. Damit der erste und der zweite Laserstrahl 3, 5 das Target 8, genauer gesagt ein jeweiliges sich entlang der vorgegebenen Bahn 10 bewegendes Zinn-Tröpfchen, in einem vorgegebenen zeitlichen Abstand treffen, ist es erforderlich, dass diese an unterschiedlichen Raumpunkten bzw. an unterschiedlichen Fokuspositionen F1, F2 entlang der Bewegungsbahn 10 des Targets 8 fokussiert werden, wie dies in Fig. 1 gezeigt ist.

Zur gezielten Ausrichtung bzw. Bündelung der auf diese Weise erzeugten EUV-Strahlung 9 umfasst die EUV-Strahlungserzeugungsvorrichtung 1 einen (nicht gezeigten) EUV-Fokussierspiegel. Das Target-Material 8, der EUV-Fokussierspiegel und der Zielbereich 7, in dem das Target-Material 8 einbringbar ist, sind in einer Vakuum-Kammer 12 der Strahlführungseinrichtung 6 angeordnet, wohingegen die beiden Strahlquellen 2, 4 zur Erzeugung des ersten und des zweiten Laserstrahls 3, 5 außerhalb der Vakuum-Kammer 12 angeordnet sind, und zwar typischer Weise in einem gemeinsamen oder in zwei getrennten Gehäusen, die in Fig. 1 nicht dargestellt sind.

Um den ersten und den zweiten Laserstrahl 3, 5 in den Zielbereich 7 zu führen, werden die beiden Laserstrahlen 3, 5 ausgehend von den jeweiligen Strahlquellen 2, 4 über eine erste Öffnung 13 bzw. über eine zweite Öffnung 14 in die Vakuum-Kammer 12 geführt. Um den ersten Laserstrahl 3 von der Strahlquelle 2 zu der ersten Öffnung 13 zu führen, weist die Strahlführungseinrichtung 6 eine Mehrzahl von Umlenkspiegeln 20 sowie ein Paar von Parabolspiegeln 21a, 21b auf, wobei letztere zur Strahlaufweitung bzw. zur Änderung des Strahlquerschnitts des ersten Laserstrahls 3 dienen.

Für die Führung des zweiten Laserstrahls 5 zur zweiten Öffnung 14 umfasst die Strahlführungseinrichtung 6 eine Teleskopanordnung 15 zur Änderung des Strahlquerschnitts des ersten Laserstrahls 3, die eine erste, fokussierende Linse 16 und eine im Strahlengang nachfolgende zweite, kollimierende Linse 17 aufweist. Im Strahlengang des zweiten Laserstrahls 5 nach der Teleskopanordnung 15 sind zwei Umlenkspiegel 18, 19 angeordnet, welche den zweiten Laserstrahl 5 zur zweiten Öffnung 14 hin umlenken.

Im Bereich der ersten Öffnung 13 ist ein die erste Öffnung 13 der Vakuum-Kammer 12 gasdicht abschließendes, den ersten Laserstrahl 3 transmittierendes optisches Element 22 angebracht, welches im gezeigten Beispiel als Fenster bzw. als dünne planparallele Platte ausgeführt ist. Entsprechend ist bei dem in Fig. 1 gezeigten Beispiel auch an der zweiten Öffnung 14 der Vakuum-Kammer 12 ein diese gasdicht abschließendes und den zweiten Laserstrahl 5 transmittierendes optisches Element 23 angebracht.

Das erste Fenster 22 an der ersten Öffnung 13 ist für den ersten Laserstrahl 3 transparent und kann aus (künstlich hergestelltem) Diamant gebildet sein, da dieses Material die durch die hohe Laserleistung (>> 1 kW) des ersten Laserstrahls 3 eingebrachte Wärme aufgrund seiner hohen Wärmeleitfähigkeit effektiv abführen kann. Das zweite Fenster 23 an der zweiten Öffnung 14 ist für den zweiten Laserstrahl 5, insbesondere für Wellenlängen von weniger als 3 µm, transparent und kann beispielsweise aus einem Quarzglas-Material gebildet sein.

Die beiden Fenster 22, 23 weisen an den der Vakuum-Kammer 12 abgewandten Oberflächen sowie an den in der Vakuum-Kammer 12 angeordneten Oberflächen jeweils eine Anti-Reflexbeschichtung für den transmittierten ersten bzw. zweiten Laserstrahl 3, 5 auf, um durch Reflexion bedingte Leistungsverluste beim Durchtritt in die Vakuum-Kammer 12 zu minimieren. Anders als in Fig. 1 dargestellt ist kann es trotz der Verwendung von Anti-Reflexbeschichtungen günstig sein, sowohl das erste Fenster 22 als auch das zweite Fenster 23 unter einem von 90° verschiedenen Winkel zur Strahlrichtung des ersten bzw. des zweiten Laserstrahls 3, 5 auszurichten, um an dem jeweiligen Fenster 22, 23 zurück reflektierte Strahlung des ersten bzw. zweiten Laserstrahls 3, 5 für Messzwecke nutzen zu können.

Die Zuführung der beiden Laserstrahlen 3, 5 durch getrennte Öffnungen 13, 14 ist günstig, da auf diese Weise das Material eines jeweiligen Fensters 22, 23 auf die zu transmittierende Wellenlänge λ₁, λ₂ des ersten bzw. zweiten Laserstrahls 3, 5 abgestimmt werden kann und dadurch Leistungsverluste bzw. Verluste der Strahlqualität beim Durchtritt durch die Fenster 22, 23 vermieden werden können.

Um die Strahlwege des ersten und des zweiten Laserstrahls 3, 5 nach dem Eintritt in die Vakuum-Kammer 12 zusammenzuführen, weist die Strahlführungseinrichtung 6 eine Überlagerungseinrichtung 24 auf. Bei dem in Fig. 1 gezeigten Beispiel ist die Überlagerungseinrichtung durch einen strahlaufweitenden Spiegel 24 gebildet, der gemeinsam mit einem im Strahlengang nachfolgenden Ellipsoidspiegel 25 eine gemeinsame Fokussiereinheit zur Fokussierung des ersten und zweiten Laserstrahls 3, 5 an der ersten Fokusposition F1 bzw. an der zweiten Fokusposition F2 innerhalb des Zielbereichs 7 bildet.

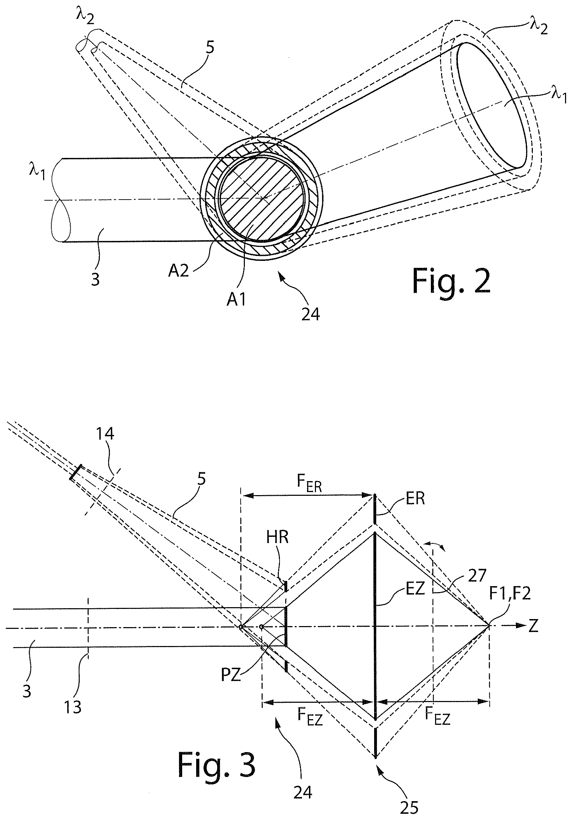

Wie in **Fig. 2** zu erkennen ist, weist der aufweitende Spiegel 24 einen ersten, im gezeigten Beispiel kreisrunden Flächenbereich A1 sowie einen zweiten, den ersten in der Art eines Kreisringes umgebenden zweiten Flächenbereich A2 auf. Auf den ersten Flächenbereich A1 trifft der erste Laserstrahl 3 mit kreisförmigem Querschnitt auf und wird an der konvex gekrümmten Paraboloid-Oberfläche PZ (vgl. Fig. 1) des ersten Flächenbereichs A1 aufgeweitet. Der zweite Laserstrahl 5 durchläuft vor dem Auftreffen auf den zweiten Flächenbereich A2 eine Strahlformungseinrichtung 26, die zur Umformung des Strahlquerschnitts des zweiten Laserstrahls 5 von einem kreisförmigen in einen ringförmigen Strahlquerschnitt ausgebildet ist. Um den zweiten Laserstrahl 5 zentrisch auf die Strahlformungseinrichtung 26, genauer gesagt auf eine dort vorgesehene konische Fläche, auftreffen zu lassen, können die beiden Umlenkspiegel 18, 19 mit Hilfe von Aktoren motorisch verkippt werden, wie in Fig. 1 durch Doppelpfeile angedeutet ist.

Die Strahlformungseinrichtung 26 dient auch zur Aufweitung des zweiten Laserstrahls 5, so dass dieser divergent auf den zweiten Flächenbereich A2 auftrifft, wie in Fig. 2 gut zu erkennen ist. Der zweite Laserstrahl 5 wird an der konvex gekrümmten Hyperboloid-Oberfläche HR (vgl. Fig. 1) des ringförmigen zweiten Flächenbereichs A2 des strahlaufweitenden Spiegels 24 aufgeweitet.

Der kollimiert auf den parabolisch gekrümmten ersten Flächenbereich A1 auftreffende erste Laserstrahl 3 wird an der Paraboloid-Oberfläche PZ aberrationsfrei reflektiert, da dieser parallel zu einer (nicht gezeigten) Symmetrieachse der Paraboloid-Oberfläche PZ verläuft. Auch der divergent auf die Hyperboloid-Oberfläche HR auftreffende zweite Laserstrahl 5 wird aberrationsfrei reflektiert, da dieser parallel zu einer (nicht gezeigten) Symmetrieachse der Hyperboloid-Oberfläche HR auf diese auftrifft. Die Oberflächengeometrie eines jeweiligen Flächenbereichs A1, A2 hängt somit davon ab, ob der jeweilige Laserstrahl konvergent, kollimiert oder divergent auf diesen auftrifft. Sofern - anders als im hier gezeigten Beispiel dargestellt - einer der beiden Laserstrahlen 3, 5 fokussiert bzw. konvergent auf einen jeweiligen Flächenbereich A1, A2 auftrifft, ist somit eine Ellipsoid-Oberfläche zur Erzeugung einer aberrationsfreien Reflexion bzw. Abbildung vorteilhaft.

Beide Laserstrahlen 3, 5 verlassen den als Überlagerungseinrichtung dienenden aufweitenden Spiegel 24 konzentrisch zueinander, d.h. diese verlaufen entlang einer gemeinsamen Strahlrichtung und treffen gemeinsam auf den im Strahlengang nachfolgenden Ellipsoidspiegel 25. Für die Wirkung als Vor-Puls bzw. als Haupt-Puls ist es erforderlich, dass die von dem Ellipsoidspiegel 25 fokussierten Laserstrahlen 3, 5 an unterschiedlichen, in einem vorgegebenen Abstand A zueinander angeordneten Fokuspositionen F1, F2 innerhalb des Zielbereichs 7 fokussiert werden, da nur auf diese Weise ein zeitlicher Versatz zwischen dem Auftreffen der beiden gepulsten Laserstrahlen 3, 5 auf ein- und dasselbe Zinn-Tröpfchen 8 realisiert werden kann. Das Zinn-Tröpfchen 8, welches an der zweiten Fokusposition F2 von einem Puls (Vor-Puls) des zweiten Laserstrahls 5 getroffen wird, wird hierbei nachfolgend von einem Puls (Haupt-Puls) des ersten Laserstrahls 3 an der ersten Fokusposition F1 getroffen.

Um dies zu erreichen, ist es typischer Weise erforderlich, den Abstand A zwischen den beiden Fokuspositionen F1, F2 entlang der Bewegungsrichtung 10 der Zinn-Tröpfchen so zu wählen, dass die Flugdauer eines jeweiligen Zinn-Tröpfchens 8 zwischen den beiden Fokuspositionen F1, F2 dem zeitlichen Versatz zwischen zwei Laserpulsen der Strahlquellen 2, 4 entspricht. Um alle Zinn-Tröpfchen 8 auf die oben beschriebene Weise zur treffen, sollte auch der Abstand zwischen zwei benachbarten Zinn-Tröpfchen 8 ein ganzzahliges Vielfaches des Abstandes A zwischen den beiden Fokuspositionen F1, F2 in Flugrichtung 10 der Zinn-Tröpfchen 8 sein.

Der Abstand A zwischen den beiden Fokuspositionen F1, F2 kann durch eine Fokuseinstelleinrichtung eingestellt werden, die im gezeigten Beispiel zur Beeinflussung der Strahlrichtung des zweiten Laserstrahls 5 dient. Die Fokuseinstelleinrichtung umfasst im gezeigten Beispiel zwei mittels Aktoren verkippbare Umlenkspiegel 20 im Strahlengang des ersten Laserstrahls 3, die es ermöglichen, die Strahlrichtung des ersten Laserstrahls 3 und damit den Auftreffbereich an dem aufweitenden Spiegel 24 zu variieren bzw. einzustellen. Durch einen mittels der Umlenkspiegel 20 erzeugten (geringfügig) schrägen Einfall des ersten Laserstrahls 3 wird dieser an einer Fokusposition F1 fokussiert, die von der Fokusposition F2 des zweiten Laserstrahls 5 um den Betrag A beabstandet ist.

Durch eine Verkippung der Umlenkspiegel 20 um jeweils geeignete Kippwinkel kann somit die Fokusposition F1 des ersten Laserstrahls 3 entlang der Bewegungsrichtung 10 des Target-Materials 8 verändert werden. Auf diese Weise kann auch der Abstand A zwischen den beiden Fokuspositionen F1, F2 entlang der Bewegungsrichtung 10 des Target-Materials eingestellt werden. Es versteht sich, dass alternativ oder zusätzlich auch eine Fokuseinstelleinrichtung zur Einstellung der Fokusposition F2 des zweiten Laserstrahls 5 entlang der Bewegungsrichtung 10 des Target-Materials 8 in der Strahlführungseinrichtung 6 vorgesehen werden kann, beispielsweise indem wie in Fig. 1 gezeigt die Strahlformungseinrichtung 26 mittels eines geeigneten Aktors motorisch gekippt wird oder indem weitere, im Strahlengang nach der Strahlformungseinrichtung 26 angeordnete (nicht gezeigte) verkippbare Umlenkspiegel zur Fokuseinstellung verwendet werden.

Um die Fokusposition F2 des zweiten Laserstrahls 5 nicht nur entlang der Bewegungsrichtung 10 des Target-Materials 8, sondern auch in einer dazu senkrechten Richtung (Z-Richtung, vgl. Fig. 1) einstellbar zu machen, kann die Teleskopanordnung 15 als Fokussiereinrichtung genutzt werden. In einer Grundstellung sind die beiden Linsen 16, 17 der Teleskopanordnung 15 im Abstand ihrer Brennweiten angeordnet, so dass der in die Teleskopanordnung 15 eintretende kollimierte zweite Laserstrahl 5 die Teleskopanordnung 15 kollimiert (und um den gewünschten Abbildungsmaßstab vergrößert bzw. verkleinert) verlässt.

Im gezeigten Beispiel ist die zweite Linse 17 des Strahlteleskops 15, welche als Kollimationslinse wirkt, mittels eines geeigneten motorischen Antriebs in bzw. entgegen der Strahlrichtung des zweiten Laserstrahls 5 verschiebbar. Durch die Verschiebung der Kollimationslinse 17 aus der Grundstellung kann aus dem kollimierten zweiten Laserstrahl 5, der in das Strahlteleskop 15 eintritt, ein divergenter oder ein konvergenter Strahl geformt werden, je nachdem, ob die zweite Linse 17 in oder entgegen der Strahlrichtung des zweiten Laserstrahls 5 verschoben wird. Tritt der zweite Laserstrahl 5 divergent oder konvergent in das Strahlteleskop 15 ein, verändert sich die Fokusposition F2 des zweiten Laserstrahls 5 in Z-Richtung, so dass das Target-Material 8 an unterschiedlichen Positionen in Z-Richtung von dem zweiten Laserstrahl 5 getroffen werden kann.

Abweichend von der in Fig. 1 gezeigten Darstellung, in der ein Ellipsoidspiegel 25 mit einer einzigen konkav gekrümmten Ellipsoid-Oberfläche E verwendet wird, um die beiden Laserstrahlen 3, 5 zu fokussieren, ist in **Fig. 3** ein Ellipsoidspiegel 25 gezeigt, der eine erste, innere konkav gekrümmte Ellipsoid-Oberfläche EZ und eine zweite, äußere ebenfalls konkav gekrümmte äußere Ellipsoid-Oberfläche ER aufweist, die wie in Fig. 2 gezeigt, d.h. als konzentrische Flächenbereiche A1, A2, angeordnet sind. Der aufweitende, die Überlagerungseinrichtung bildende Spiegel 24 und der Ellipsoidspiegel 25 sind in Fig. 3 durch vertikale Linien dargestellt, welche die Spiegelpositionen darstellen, an denen die Laserstrahlen 3, 5 aufgeweitet bzw. fokussiert werden. Wie in Fig. 3 zu erkennen ist, stimmen die austrittsseitigen Brennweiten der beiden Ellipsoid-Oberflächen EZ, ER überein, so dass beide Fokuspositionen F1, F2 in Z-Richtung, d.h. senkrecht zur Bewegungsrichtung 11 des Target-Materials 8, übereinstimmen.

In Fig. 3 gestrichelt dargestellt ist ein Umlenkspiegel 27 mit planer Spiegeloberfläche, der zur Strahlfaltung bzw. zur Umlenkung des ersten und zweiten Laserstrahls 3, 5 in Richtung auf den Zielbereich 7 dient. Der Umlenkspiegel 27 ist mittels eines motorischen Antriebs verkippbar, wie in Fig. 3 durch einen Doppelpfeil angedeutet ist. Treffen die beiden Laserstrahlen 3, 5 parallel bzw. mit einer gemeinsamen Strahlrichtung auf den Umlenkspiegel 27, können die Fokuspositionen F1, F2 der beiden Laserstrahlen 3, 5 gemeinsam in Z-Richtung, d.h. senkrecht zur Bewegungsrichtung 11 des Target-Materials 8, verschoben werden, ohne dass sich hierbei der Abstand A zwischen den beiden Fokuspositionen F1, F2 verändert. Die Verschiebung der Fokuspositionen F1, F2 der beiden Laserstrahlen 3, 5 in Z-Richtung dient zur Optimierung der Plasma-Ausbeute und damit zur Maximierung der von der EUV-Strahlungserzeugungsvorrichtung 1 erzeugten Strahlungsleistung.

Die eintrittsseitige Brennweite F_{EZ} der ersten, inneren Ellipsoid-Oberfläche EZ ist gleich groß wie deren austrittsseitige Brennweite F_{EZ}, um das Auftreten von Unwuchten bei der Herstellung des Ellipsoidspiegels 25 zu vermeiden. Die eintrittsseitige Brennweite F_{ER} der äußeren Ellipsoid-Oberfläche EZ stimmt jedoch nicht mit der eintrittsseitigen Brennweite F_{EZ} der inneren Ellipsoid-Oberfläche EZ überein, sondern ist im gezeigten Beispiel größer (F_{ER} > F_{EZ}), wodurch der Flächeninhalt bzw. die Größe der äußeren Ellipsoid-Oberfläche ER reduziert werden kann. Die Wahl unterschiedlicher eingangsseitiger Brennweiten F_{ER}, F_{EZ} der beiden Ellipsoid-Oberflächen ER, EZ hat sich als günstig erwiesen, um am Übergang zwischen den beiden Flächenbereichen A1, A2 des aufweitenden Spiegels 24 hervorgerufene Beugungseffekte bei der Fokussierung auf den Zielbereich 7 zu eliminieren.

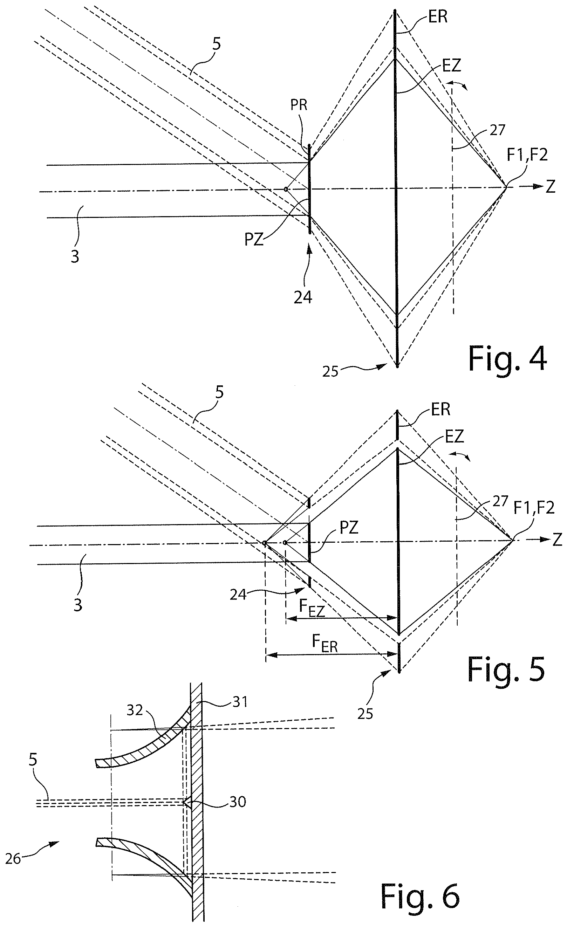

**Fig. 4** zeigt eine Konfiguration des aufweitenden Spiegels 24 und des fokussierenden Spiegels 25, bei welcher der zweite Laserstrahl 5 kollimiert auf den ersten, aufweitenden Spiegel 24 auftrifft. In diesem Fall weist der zweite, äußere Flächenbereich A2 eine konvexe Paraboloid-Oberfläche PR auf, um eine aberrationsfreie Abbildung zu realisieren. Die äußere Paraboloid-Oberfläche PR bildet hierbei ein Segment eines Paraboloids, dessen Hauptachse bzw. Symmetrieachse parallel zum einfallenden zweiten Laserstrahl 5 verläuft. Bei der in Fig. 4 gezeigten Konfiguration stimmen die eintrittsseitige und austrittsseitige Brennweite des Ellipsoidspiegels 25 überein, d.h. die in Fig. 4 dargestellte innere Ellipsoid-Oberfläche EZ und äußere Ellipsoid-Oberfläche ER sind in der Realität Teilbereiche ein- und derselben Ellipsoid-Oberfläche, wie sie in Fig. 1 gezeigt ist. Der innere Teilbereich EZ der Ellipsoid-Oberfläche und der äußere Teilbereich ER der Ellipsoid-Oberfläche können mit unterschiedlichen Beschichtungen versehen sein, welche für die Reflexion der ersten bzw. der zweiten Wellenlänge λ₁, λ₂ optimiert sind.

**Fig. 5** zeigt eine Darstellung analog Fig. 4, bei welcher der Ellipsoidspiegel 25 wie in Fig. 3 gezeigt eine erste, innere konkav gekrümmte Ellipsoid-Oberfläche EZ und eine zweite, äußere konkav gekrümmte Ellipsoid-Oberfläche ER aufweist, die wie in Fig. 3 unterschiedliche eintrittsseitige Brennweiten F_{EZ}, F_{ER} aufweisen, um Beugungsverluste zu reduzieren.

**Fig. 6** zeigt schließlich eine Detaildarstellung der Strahlformungseinrichtung 26 von Fig. 1, welche zur Erzeugung eines ringförmigen Strahlquerschnitts bei dem zweiten Laserstrahl 5 dient. Die Strahlformungseinrichtung 26 weist zu diesem Zweck eine zentrale Konusfläche 30 bzw. ein kegelförmiges optisches Element auf, das an einem transparenten, plattenförmigen Halter 31 angebracht ist. An der konisch umlaufenden reflektierenden Oberfläche 30 wird der einfallende Laserstrahl 5 um 90° umgelenkt und trifft auf einen ringförmigen parabolischen Spiegel 32, der ebenfalls an dem Halter 31 befestigt ist. Wie in Fig. 6 zu erkennen ist, wird an dem parabolischen Spiegel 32 nicht nur ein ringförmiger Strahlquerschnitt erzeugt, sondern der zweite Laserstrahl 5 wird auch aufgeweitet, d.h. dieser weist beim Verlassen der Strahlformungseinrichtung einen divergenten Strahlengang auf. Durch den im gezeigten Beispiel parabolisch ausgebildeten ringförmigen Spiegel 32 wird erreicht, dass der radial innen liegende Randstrahl des aufgeweiteten zweiten Laserstrahls 5 parallel zur Strahlrichtung des einfallenden zweiten Laserstrahls 5 verläuft, während der radial außen liegende Randstrahl unter einem Winkel zu diesem verläuft, so dass der austretende zweite Laserstrahl 5 insgesamt divergiert.

Es versteht sich, dass an Stelle eines parabolisch gekrümmten Spiegels auch ein planer ringförmiger Spiegel 32 in der Strahlformungseinrichtung 26 vorgesehen werden kann, um den austretenden zweiten Laserstrahl 5 mit seiner Strahlachse parallel zum in die Strahlformungseinrichtung 26 eintretenden zweiten Laserstrahl 5 auszurichten, wie dies in Fig. 1 angedeutet ist. Hierbei kann durch die Festlegung des Winkels, unter dem der ringförmige Spiegel 32 zur Strahlachse des zweiten Laserstrahls 5 angeordnet ist, die Ausrichtung des ringförmigen austretenden zweiten Laserstrahls 5 eingestellt werden, so dass dieser kollimiert, divergent oder konvergent aus der Strahlformungseinrichtung 26 austritt. Es versteht sich, dass dies bei geeigneter Auslegung der Krümmung der reflektierenden Oberfläche auch mittels des in Fig. 6 gezeigten parabelförmigen Ringspiegels 32 möglich ist.

Zur Überwachung und Steuerung bzw. Regelung der Erzeugung der EUV-Strahlung 9 weist die oben beschriebene Strahlführungseinrichtung 6 eine Kontrolleinrichtung in Form einer Steuer-/Regeleinrichtung 40 auf, die ausgebildet bzw. programmiert ist, die Pulserzeugung der beiden Strahlquellen 2, 4 mit der (nicht gezeigten) Bereitstellungseinrichtung für das Target-Material 8 zu synchronisieren. Die Steuer- und Regeleinrichtung 40 ist auch ausgebildet bzw. programmiert, die Strahlrichtung des ersten bzw. des zweiten Laserstrahls 3, 5 zu beeinflussen, um eine ggf. erforderliche Veränderung des Abstandes A zwischen den beiden Fokuspositionen F1, F2 entlang der Bewegungsrichtung 11 des Target-Materials 8 vorzunehmen und steht zu diesem Zweck mit zwei die verkippbaren Umlenkspiegel 20 ansteuernden Aktoren sowie ggf. mit Aktoren von weiteren, im Strahlengang des zweiten Laserstrahls 5 nach der Strahlformungseinrichtung 26 angeordneten verkippbaren Umlenkspiegeln (nicht gezeigt) in signaltechnischer Verbindung. Die Steuer- und Regeleinrichtung 40 dient auch zur Einstellung der Aktoren der beiden vor der Strahlformungseinrichtung 26 angeordneten Umlenkspiegel 18, 19, um einen zentrischen Einfall sowie eine geeignete Ausrichtung des zweiten Laserstrahls 5 auf die konische Fläche 30 zu bewirken. Schließlich steht die Steuer- und Regeleinrichtung 40 auch zur Verschiebung der zweiten Linse 17 des Strahlteleskops 16 mit einem durch einen Doppelpfeil angedeuteten Antrieb bzw. Aktor sowie ggf. mit einem Antrieb zur Verschiebung der bzw. eines der Parabolspiegel 21a, 21b im Strahlengang des ersten Laserstrahls 3 in Verbindung. Die Steuer-/Regeleinrichtung 40 ermöglicht es auf diese Weise, auch bei Störungen in der Strahlführung, die beispielsweise durch Vibrationen, durch thermische Einflüsse oder Fluktuationen in den Strahlquellen 2, 4 hervorgerufen werden, jeden der beiden Laserstrahlen 3, 5 an seiner Fokusposition F1, F2 zu halten, so dass diese mit einer jeweiligen Soll-Fokusposition übereinstimmt.

Auf die oben beschriebene Weise kann trotz der erschwerten optischen, geometrischen, d.h. bauraumbedingten sowie verfahrens- und fertigungsbedingten Randbedingungen, die bei der vorliegenden Anwendung auftreten, auf besonders effektive Weise eine gemeinsame Fokussierung der beiden Laserstrahlen mit (deutlich) unterschiedlichen Wellenlängen in dem gemeinsamen Zielbereich realisiert werden.

Alternativ zu der oben beschriebenen Überlagerung der beiden Laserstrahlen 3, 5 an dem reflektierenden, strahlaufweitenden optischen Element 24 kann eine Überlagerung der beiden Laserstrahlen 3, 5 in der Vakuum-Kammer 12 auch auf andere Weise realisiert werden. Insbesondere kann eines der beiden Fenster 22, 23, welche die Vakuum-Kammer 12 gasdicht abschließen, als Überlagerungseinrichtung genutzt werden, indem eine in der Vakuum-Kammer 12 angeordnete optische Oberfläche des jeweiligen Fensters 22, 23 mit einer für den jeweils nicht durch das Fenster 22, 23 hindurch tretenden Laserstrahl 5, 3 reflektierenden Beschichtung versehen wird, welche für den hindurch tretenden Laserstrahl 3, 5 transparent ist. An der reflektierenden Beschichtung wird der durch das jeweils andere Fenster 23, 22 hindurch tretende Laserstrahl 5, 3 reflektiert, so dass beide Laserstrahlen 3, 5 an dem Fenster 22, 23 überlagert werden und nachfolgend entlang einer gemeinsamen Strahlrichtung in der Vakuum-Kammer 12 propagieren.

## Patentansprüche

1. Strahlführungseinrichtung (6), umfassend:
eine Vakuum-Kammer (12), in der zur Erzeugung von EUV-Strahlung (9) ein Target-Material (8) in einem Zielbereich (7) einbringbar ist, wobei die Vakuum-Kammer (12) eine erste Öffnung (13) zum Eintritt eines ersten Laserstrahls (3) sowie eine zweite Öffnung (14) zum Eintritt eines zweiten Laserstrahls (5) aufweist, wobei der erste Laserstrahl (3) und der zweite Laserstrahl (5) unterschiedliche Wellenlängen (λ₁, λ₂) aufweisen, sowie
eine Überlagerungseinrichtung (24) zur Überlagerung der beiden durch die erste und die zweite Öffnung (13, 14) in die Vakuum-Kammer (12) eintretenden Laserstrahlen (3, 5) zur gemeinsamen Strahlführung in Richtung auf den Zielbereich (7), wobei die Überlagerungseinrichtung als ein in der Vakuum-Kammer (12) angeordnetes reflektierendes optisches Element (24) ausgebildet ist, welches einen ersten Flächenbereich (A1) zur Reflexion des ersten Laserstrahls (3) und einen zweiten, den ersten ringförmig umgebenden Flächenbereich (A2) zur Reflexion des zweiten Laserstrahls (5) aufweist,
**dadurch gekennzeichnet,**
**dass** das reflektierende optische Element (24) zur Aufweitung des ersten und des zweiten Laserstrahls (3, 5) ausgebildet ist.

2. Strahlführungseinrichtung nach Anspruch 1, bei welcher der erste Flächenbereich (A1) eine konvex gekrümmte Paraboloid-Oberfläche (PZ) aufweist.

3. Strahlführungseinrichtung nach einem der Ansprüche 1 oder 2, bei welcher der zweite Flächenbereich (A2) eine konvex gekrümmte Hyperboloid-Oberfläche (HR) aufweist.

4. Strahlführungseinrichtung nach einem der vorhergehenden Ansprüche, bei der zur Fokussierung des ersten und zweiten Laserstrahls (3, 5) innerhalb des Zielbereichs (7) im Strahlengang nach dem die Überlagerungseinrichtung bildenden reflektierenden optischen Element (24) ein, insbesondere reflektierendes, fokussierendes optisches Element (25) angeordnet ist.

5. Strahlführungseinrichtung nach Anspruch 4, bei welcher das fokussierende optische Element (25) mindestens eine konkav gekrümmte, reflektierende Ellipsoid-Oberfläche (E) aufweist.

6. Strahlführungseinrichtung nach Anspruch 4 oder 5, bei welcher das fokussierende optische Element (25) einen ersten Flächenbereich (A1) zur Reflexion des ersten Laserstrahls (3) und einen zweiten, den ersten ringförmig umgebenden Flächenbereich (A2) zur Reflexion des zweiten Laserstrahls (5) aufweist.

7. Strahlführungseinrichtung nach einem der Ansprüche 4 bis 6, bei welcher der erste Flächenbereich (A1) eine erste konkav gekrümmte Ellipsoid-Oberfläche (EZ) mit einer ersten eingangsseitigen Brennweite (F_{EZ}) und der zweite Flächenbereich (A2) eine zweite konkav gekrümmte Ellipsoid-Oberfläche (ER) mit einer zweiten, von der ersten Ellipsoid-Oberfläche (EZ) verschiedenen eingangsseitigen Brennweite (F_{ER}) aufweist.

8. Strahlformungseinrichtung nach Anspruch 7, bei welcher die erste und die zweite konkav gekrümmte Ellipsoid-Oberfläche (EZ, ER) gleiche ausgangsseitige Brennweiten (F_{EZ}) aufweisen.

9. Strahlformungseinrichtung nach Anspruch 7 oder 8, bei welcher eine eingangsseitige Brennweite (F_{EZ}) der ersten konkav gekrümmten Ellipsoid-Oberfläche (EZ) und eine ausgangsseitige Brennweite (F_{EZ}) der ersten konkav gekrümmten Ellipsoid-Oberfläche (EZ) gleich groß sind.

10. Strahlführungseinrichtung nach einem der Ansprüche 7 bis 9, bei welcher im Strahlengang nach dem fokussierenden optischen Element (25) ein Umlenkspiegel (27) zur Umlenkung des ersten und zweiten Laserstrahls (3, 5) in Richtung auf den Zielbereich (7) angeordnet ist.

11. Strahlführungseinrichtung nach Anspruch 10, bei welcher der Umlenkspiegel (27) zur gemeinsamen Veränderung der Fokuspositionen (F1, F2) des ersten und zweiten Laserstrahls (3, 5) verkippbar ausgebildet ist.

12. Strahlführungseinrichtung nach einem der vorhergehenden Ansprüche, weiter umfassend: eine im Strahlengang des zweiten Laserstrahls (5) vor der Überlagerungseinrichtung (24) angeordnete Strahlformungseinrichtung (26) zur Bildung eines zweiten Laserstrahls (5) mit ringförmigem Strahlprofil.

13. Strahlformungseinrichtung nach Anspruch 12, bei welcher die Strahlformungseinrichtung (26) eine ringförmig umlaufende Spiegelfläche (32) aufweist.

14. Strahlführungseinrichtung nach Anspruch 13, bei welcher die ringförmig umlaufende Spiegelfläche (32) eine konvex gekrümmte Paraboloid-Oberfläche oder eine plane Oberfläche bildet.

15. EUV-Strahlungserzeugungsvorrichtung (1), umfassend: eine erste und zweite Strahlquelle (2, 4) zur Erzeugung des ersten und zweiten Laserstrahls (3, 5), sowie eine Strahlführungseinrichtung (6) nach einem der vorhergehenden Ansprüche.

## Claims

1. A beam guiding apparatus (6), comprising:
a vacuum chamber (12), in which a target material (8) is introducible into a target region (7) for generating EUV radiation (9), wherein the vacuum chamber (12) has a first opening (13) for the entry of a first laser beam (3) and a second opening (14) for the entry of a second laser beam (5), wherein the first laser beam (3) and the second laser beam (5) have different wavelengths (λ₁, λ₂), and
a superposition apparatus (24) for superposing the two laser beams (3, 5) entering into the vacuum chamber (12) through the first and second openings (13, 14) for common beam guidance in the direction of the target region (7), wherein the superposition apparatus is embodied as a reflecting optical element (24) arranged in the vacuum chamber (12), which optical element has a first surface region (A1) for reflecting the first laser beam (3) and a second surface region (A2), surrounding the first surface region in a ring-shaped manner, for reflecting the second laser beam (5), **characterized in that** the reflecting optical element (24) is designed to expand the first and second laser beams (3, 5).

2. The beam guiding apparatus as claimed in claim 1, wherein the first surface region (A1) has a convexly curved paraboloid surface (PZ).

3. The beam guiding apparatus as claimed in one of claims 1 or 2, wherein the second surface region (A2) has a convexly curved hyperboloid surface (HR).

4. The beam guiding apparatus as claimed in any one of the preceding claims, wherein, for the purposes of focusing the first and second laser beams (3, 5) within the target region (7), a focusing, in particular reflecting, optical element (25) is arranged in the beam path downstream of the reflecting optical element (24) forming the superposition apparatus.

5. The beam guiding apparatus as claimed in claim 4, wherein the focusing optical element (25) has at least one concavely curved, reflecting ellipsoid surface (E).

6. The beam guiding apparatus as claimed in claim 4 or 5, wherein the focusing optical element (25) has a first surface region (A1) for reflecting the first laser beam (3) and a second surface region (A2), surrounding the first surface region in a ring-shaped manner, for reflecting the second laser beam (5).

7. The beam guiding apparatus as claimed in one of claims 4 to 6, wherein the first surface region (A1) has a first concavely curved ellipsoid surface (EZ) with a first entrance-side focal length (F_{EZ}) and the second surface region (A2) has a second concavely curved ellipsoid surface (ER) with a second entrance-side focal length (F_{ER}) differing from the one of the first ellipsoid surface (EZ).

8. The beam shaping apparatus as claimed in claim 7, wherein the first and second concavely curved ellipsoid surfaces (EZ, ER) have the same exit-side focal lengths (F_{EZ}).

9. The beam shaping apparatus as claimed in claim 7 or 8, wherein an entrance-side focal length (F_{EZ}) of the first concavely curved ellipsoid surface (EZ) and an exit-side focal length (F_{EZ}) of the first concavely curved ellipsoid surface (EZ) have the same magnitude.

10. The beam guiding apparatus as claimed in one of claims 7 to 9, wherein a deflection mirror (27) for deflecting the first and second laser beams (3, 5) in the direction of the target region (7) is arranged in the beam path downstream of the focusing optical element (25).

11. The beam guiding apparatus as claimed in claim 10, wherein the deflection mirror (27) has a tiltable construction for common changing of the focal positions (F1, F2) of the first and second laser beams (3, 5).

12. The beam guiding apparatus as claimed in one of the preceding claims, further comprising: a beam shaping apparatus (26) for forming a second laser beam (5) with a ring-shaped beam profile, arranged upstream of the superposition apparatus (24) in the beam path of the second laser beam (5).

13. The beam shaping apparatus as claimed in claim 12, wherein the beam shaping apparatus (26) has a ring-shaped circumferential mirror surface (32).

14. The beam guiding apparatus as claimed in claim 13, wherein the ring-shaped circumferential mirror surface (32) forms a convexly curved paraboloid surface or a plane surface.

15. An EUV radiation generating device (1), comprising: a first and second beam source (2, 4) for generating the first and second laser beams (3, 5), and a beam guiding apparatus (6) as claimed in one of the preceding claims.

## Revendications

1. Système de guidage de faisceaux (6), comprenant :
une chambre à vide (12) dans laquelle un matériau cible (8) peut être introduit dans une zone cible (7) afin de générer un rayonnement EUV (9), laquelle chambre à vide (12) comporte un premier orifice (13) pour l'entrée d'un premier faisceau laser (3) ainsi qu'un deuxième orifice (14) pour l'entrée d'un deuxième faisceau laser (5), le premier faisceau laser (3) et le deuxième faisceau laser (5) présentant des longueurs d'onde différentes (λ₁, λ₂), et
un système de superposition (24) servant à superposer les deux faisceaux laser (3, 5) qui pénètrent dans la chambre à vide (12) à travers le premier et le deuxième orifice (13, 14) afin de les guider conjointement en direction de la zone cible (7), le système de superposition étant réalisé sous la forme d'un élément optique réfléchissant (24) disposé dans la chambre à vide (12), lequel présente une première zone de surface (A1) pour la réflexion du premier faisceau laser (3) et une deuxième zone de surface (A2), entourant la première en forme d'anneau, pour la réflexion du deuxième faisceau laser (5),
**caractérisé en ce**
**que** l'élément optique réfléchissant (24) est conçu pour élargir le premier et le deuxième faisceau laser (3, 5).

2. Système de guidage de faisceaux selon la revendication 1, dans lequel la première zone de surface (A1) présente une surface paraboloïdale à courbure convexe (PZ).

3. Système de guidage de faisceaux selon l'une des revendications 1 ou 2, dans lequel la deuxième zone de surface (A2) présente une surface hyperboloïdale à courbure convexe (HR).

4. Système de guidage de faisceaux selon l'une des revendications précédentes, dans lequel un élément optique focalisant (25), en particulier réfléchissant, est disposé après l'élément optique réfléchissant (24) formant le système de superposition dans le chemin optique pour focaliser le premier et le deuxième faisceau laser (3, 5) à l'intérieur de la zone cible (7).

5. Système de guidage de faisceaux selon la revendication 4, dans lequel l'élément optique focalisant (25) présente au moins une surface ellipsoïdale réfléchissante à courbure concave (E).

6. Système de guidage de faisceaux selon la revendication 4 ou 5, dans lequel l'élément optique focalisant (25) présente une première zone de surface (A1) pour réfléchir le premier faisceau laser (3) et une deuxième zone de surface (A2), entourant la première en forme d'anneau, pour réfléchir le deuxième faisceau laser (5).

7. Système de guidage de faisceaux selon l'une des revendications 4 à 6, dans lequel la première zone de surface (A1) présente une première surface ellipsoïdale à courbure concave (EZ) avec une première distance focale côté entrée (F_{EZ}) et la deuxième zone de surface (A2) une deuxième surface ellipsoïdale à courbure concave (ER) avec une deuxième distance focale côté entrée (F_{ER}), différente de celle de la première surface ellipsoïdale (EZ).

8. Système de mise en forme de faisceau selon la revendication 7, dans lequel la première et la deuxième surface ellipsoïdale à courbure concave (EZ, ER) présentent les mêmes distances focales côté sortie (F_{EZ}).

9. Système de mise en forme de faisceau selon la revendication 7 ou 8, dans lequel une distance focale côté entrée (F_{EZ}) de la première surface ellipsoïdale à courbure concave (EZ) et une distance focale côté sortie (F_{EZ}) de la première surface ellipsoïdale à courbure concave (EZ) sont égales.

10. Système de guidage de faisceaux selon l'une des revendications 7 à 9, dans lequel un miroir de déviation (27) pour dévier le premier et le deuxième faisceau laser (3, 5) en direction de la zone cible (7) est disposé après l'élément optique focalisant (25) dans le chemin optique.

11. Système de guidage de faisceaux selon la revendication 10, dans lequel le miroir de déviation (27) est conçu basculant pour modifier en commun les positions focales (F1, F2) du premier et du deuxième faisceau laser (3, 5).

12. Système de guidage de faisceaux selon l'une des revendications précédentes, comprenant en outre : un système de mise en forme de faisceau (26) disposé avant le système de superposition (24) dans le chemin optique du deuxième faisceau laser (5) pour former un deuxième faisceau laser (5) à profil de faisceau annulaire.

13. Système de mise en forme de faisceau selon la revendication 12, dans lequel le système de mise en forme de faisceau (26) présente une surface réfléchissante s'étendant en forme d'anneau (32).

14. Système de guidage de faisceaux selon la revendication 13, dans lequel la surface réfléchissante s'étendant en forme d'anneau (32) forme une surface paraboloïdale à courbure convexe ou une surface plane.

15. Dispositif de génération d'un rayonnement EUV (1), comprenant : une première et une deuxième source de rayonnement (2, 4) pour générer le premier et le deuxième faisceau laser (3, 5) ainsi qu'un système de guidage de faisceaux (6) selon l'une des revendications précédentes.
